# EUROPEAN PATENT APPLICATION

(11) **EP 0 927 891 A2**
(43) Date of publication of application: **07.07.1999**
(21) Application number: 98500265.8
(22) Date of filing: 04.12.1998
(51) Int. Cl.: G01T 1/166

(54) **Improved apparatus for radiological scanning**

(30) Priority: 05.12.1997 ES 9702535; 01.12.1998 ES 9802518
(71) Applicant: Suinsa Subcontratas Internacionales, S.A., 8850 Torrejon de Ardoz (Madrid) (ES)
(72) Inventor: Magarino Lastra, Manuel, 28850 Torrejon de Ardoz, Madrid (ES); Gallego Amor, Julio, 28850 Torrejon de Ardoz, Madrid (ES); Santos Gonzalo, José, 28850 Torrejon de Ardoz, Madrid (ES)
(74) Representative: Sanchez del Campo Gonzalez de Ubierna, Ramon

(57) **Abstract**

An improved apparatus for radiological scanning, consisting of a supporting column (2), on which replaceable plates are fixed by means of clips, presenting a digital display (4) at the upper part, fitted with luminous indicators and, optionally acoustic ones, a rack-carriage (7) being fixed on the column (2), an intermediate carriage (9) being fixed on it, and the latter being fixed on a bucky (5), presenting rotation elements (13) and (13') which are fastened by retaining and turning elements (15) and (15') to the sides of a frontal projection of the intermediate carriage (9), the intermediate carriage (9) being fitted with a graduated scale (14), and the bucky prescenting a lateral opening (8), through which the incorporation of an image in a support (34) is performed, the opening (8) - being located either on the right side or on the left side, like the image support (34).

## Description

### BACKGROUND OF THE INVENTION

The present specification refers to an application for a Patent of Invention referring to an improved apparatus for radiological scanning, the obvious purpose of which is to be configurated like an apparatus of those known as X-ray apparatuses, destined to perform, starting from itself, direct radiological scanning, or through the use of plates, the utilization of this type of apparatuses being carried out by professional specialists belonging to the medicine sector, the services of whom are requested by specialists of other medicine sectors, or directly requested by medical professionals who incorporate them in their consultation rooms; this improved apparatus relying on the possibility of tilting by means of a gas spring, as well as a screen for displaying the different coordinates specifically used in this field, the status of the image being displayed on the screen, in a digital display capable of transmitting the motion by means of a toothed belt, totally free of maintenance,having also sensors located at reasonable positions obtained through photoelectric cells, and presenting an automatic collimation with horizontal and vertical bucky, and allowing the incorporated rotation angle to be exposed in any position, there being in its context negative electric brakes acting in an adequate way, even in the case of having a failure in the feeding current, and on the lines of its fastening on the floor, with regard to the column fitted with casings or external covers allowing them to be quicky replaced, changing the aesthetic of the own body of the apparatus, its fastening on the floor surface - being performed, implemented with an auxiliary fixing on a wall or ornamental cover, in order to avoid the own column joined to the screen to be tilted during the operation.

It is also an object of the invention the possibility of incorporating an external ovoid or similar casing, having, on its sides, a longitudinal split, vertically arranged, allowing the anchoring elements of an external supporting structure to be coupled, this coupling holding duly retained a piece constituting the tube destined to radiological scanning, having, inside, two toothed belts facilitating the ascent and descent of said tube, and incorporating inside an articulate pipe, all the cables required for operating the apparatus, the external zone presenting only and exclusively the end of the connecting cables coupled to appropiate terminals of the tube zone, and having, at the upper part, a servomechanism fitted with a potentiometer directly connected to an apparatus located at an opposite zone to that described, acchieving an harmonic and synchronized ascent of the tube with the respective element incorporated in the opposite column.

### FIELD OF THE INVENTION

This invention applies to the industry dedicated to the manufacture of electromedical and similar apparatuses, to be exact, to the industry manufacturing X-ray apparatuses.

### RELATED ART

The applicant is aware of the existence, at present, of a plurality of X-ray or radiological scanning apparatuses on the lines of which it is possible to carry out the obtaining of plates showing the interior of the human body, or else to carry out a direct radiological scanning on the part of a specialist.

Nevertheless, the applicant is not aware at present of the existence of an X-ray aparatus presenting the - following characteristics, to wit:
- A tilting by means of a gas spring.
- A quick aesthetic change as regard its physical configuration by the replacement of the external covers of the body of the supporting column.
- A screen for displaying both the coordinates and the image status.
- Transmission of the motion by means of a toothed belt, which does not need any maintenance service.
- Non-existence of external screws for fixing the external covers, and, besides, the fixing of the covers being carried out by means of clips.
- Sensors being located at discreet positions thru photoelectrical cells.
- Automatic collimation with horizontal and vertical bucky.
- Exposition at any position of the rotation angle.
- Negative electrical brakes.
- Total camouflage of the cables used.
- Direct fastening of the column to the floor, its joint to a wall or ornament cover being required only and exclusively as safety element in order to avoid the possibility of tilting during its handling.
- Quality of being polyvalent, which facilitates its installation in zones when its access is made on the left side or the right side, with requiring the utilization of a screen having a specific configuration with regard to the side where it is incorporated.

It would be desirable to rely on a radiological - scanning apparatus fitted with the above mentioned characteristics.

### SUMMARY OF THE INVENTION

The improved apparatus for radiological scanning as proposed by the invention, constitutes per se an obvious novelty within its specific field of application, since it combines in its context all the characteristics above mentioned as suitable.

In a most concrete way, the improved apparatus for radiological scanning of the invention is constituted, starting from a column, on which the screen which carries the image support is fastened, and on the lines thereof, a direct scanning of a patient is optionally performed, this element presenting a fastening zone to a body fastened on its opposite side to an element - sliding vertically upward and downward on a vertical column, fastened down on a zone lower to the floor surface, implemente with an auxiliary fixing to a wall, in order to avoid tiltings, this column presenting external covers fastened on the own column by means of clips, so facilitating a quick replacement, and incorporating, on the upper part of the column, a liquid quartz screen or display, on which different coordinates are visualized, which have been requested from the apparatus, and the screen , support thereof and the sliding on the column element motion being performed by means of a toothed belt, which does not require any maintenance service.

The coordinates required from the apparatus can be the so-called HSID (horizontal source to image distance), or horizontal distance from the source to the image, like the coordinate VSID (vertical source to image distance) or vertical distance from the source to the image), that is to say, they measure the horizontal or vertical coordinates between the focus or focal point of the X-ray tube to the image, and they can also representing the tilting, or panel angulation motion, as regard its vertical plane, by reason of the incorporated gas mechanism.

The invention relies on sensors located at discreet positions through photoelectrical cells, is fitted with automatic collimation with horizontal and vertical bucky.

The radiological scanning apparatus, on the lines of its characteristics as regard its mobility, is capable of performing an exposition at any position from the rotation angle.

In order to obviate the possibility of an automatic and unexpected descent of the bodies sliding on the column owing to an electric current or feeding current failure, the invention relies on negative electrical brakes, i.e. they are continuously activated lacking energy, and they operate, that is to say, releasing the sliding elements on the column from actuating when these are fed with electric energy.

On the lines of the characteristics of the body,inside which the insertion of the part carrying images is performed, which is acceded on a side, and the chassis carrying the mentioned parts being fitted with the possibility of being positioned, with regard the opening on the left side or the right side by means of a simple operation, this radiological scanning apparatus can be mounted in a room or dwelling, and in a point thereof to which can be acceded owing to its dimensions, on the right or left zone.

As above mentioned, the column used to support the sliding parts is fastened, at its lower side, on a floor or surface, being implemented with an auxiliary fastening on a wall or ornamental cover, in order to obviate tiltings during its handling.

The invention allows, on the lines of the existence in the rear part of the body of the display or screen carrying inside the element destined to receive images of four circular pieces having a configuration similar to that a pulley, to retain, in its channel, a sliding body turning 180º in accordance with the performing required from it, from a handle or holder emerging from the circular surface retained by the above mentioned - pieces like pulleys.

An extensible support emerges from this rear part, which allows the radiological scannings to be feasible, upon obtaining that the bucky adopts an horizontal position, facilitating to scan zones requiring it, such as raised arms, legs, etc., but the subjet to be scanned being in an erect position, or, at most, in a sat down position.

The invention relies on a counterweight, on which the ends of said toothed belts are fixed, generating, in a simplified manner, the motion.

In accordance with the above mentioned characteristics, and with the fact that the own apparatus is capable of presenting several manufacture options, the apparatus can be presented with a greater or smaller number of options, in order to be adapted to the specialist's needs and possibilities.

The apparatus for radiological scannings can be constituted, at option, starting from incorporating, in the external side of the carriage supporting column, bodies capable of adopting an ellipsoidal,oval or any other configuration as deemed convenient, - outwardly covering the column, so keeping out of sight the required cables for operating said carriage, presenting, at the external side of the covering casing having any configuration, slots positioned on the sides and longitudinally located, which, at their upper part, present a determinate width, and at their middle and lower part present a lightly larger width, there being, at the inner part, an articulated pipe having appropiate slots directly acting on a gear, and fitted with openings on the sides, facilitating its articulated mobility formed by bodies joined one other at the ends, and configuring a continuous surface upon relying on a tubular configuration, which allows the required cables to be maintained at its inner part, and, at the same time, on the lines of the opening existing at both ends, it allows the tube handling qualities to be fully adequate and enhanced, having at the upper part a servomechanism, which, in collaboration with a potentiometer, facilitates the operation of the object of the invention in this embodiment.

In short, thanks to the existence of the articulated pipe and the fixing elements located at its ends, it is possible to have an apparatus for radiological scannings which does not exhibit outwardly any cabling, and nearly all its path is in hiding in the inner zone of a channelling formed by the articulated pipe and its different elements constituting same, therein they are inserted and support the practical totallity of the conductive elements generating the central zone of the body carrying the cables.

Obviously, this articulated tubular channelling or piping inside which the cables are inserted, will mobilize in accordance with the performing of a lateral - toothed belt as mentioned in the first part of this - specification, which, in collaboration with another similar synchronized at the other side of the column, achieves the mobilization of apparatus body located outwardly, to be exact, at the external side of the casing covering the supporting vertical post, the mobilization being performed in a fully simplified way.

### DESCRIPTION OF DRAWINGS

In order to complement this description and aid to a better understanding of the characteristics of the invention, the appending drawings, which are a part of this specifications, show, by way of illustrative and non-limiting example, the following figures:

Figure 1 corresponds to a front elevational view of the object of the invention, referring to an improved apparatus for radiological scanning, showing in a specific way, the display or screen, the supporting column, as well as the screen handle, and at the upper part of the column, the information digital display.

Figure 2 shows a side elevational view, with the added detail of the union of the screen and the carriage with the possibility of an angular mobilization of same, as well as the supporting column and the sliding element fixed on it.

Figure 3 shows the constitutive part of the intermediate carriage, this part being moved by means of an external lever, acting directly on a gas spring.

Figure 4 corresponds to plan view thru the sectioned upper part of the object shown in figure 3.

Figure 5 shows the supporting assembly of the bucky carrying inside an image carrier on which the bucky in the strict sense is moved.

Figure 6 shows a side elevational view of the object represented in figure 5, and showing also the extractable support for performing radiological scannings on persons who cannot be in erect positions.

Figure 7 shows a view thru the rear part of the object represented in figure 5, with the addition of three details corresponding to the pieces allowing thebucky support to turn 180º.

Figure 8 shows a view of the rack-carriage sliding on the column.

Figure 9 shows a side elevational view of the rack-carriage represented in figure 8.

Figure 10 corresponds to a view with marginal details of the toothed wheel support.

Figure 11 shows an assembly of counterweights.

Figure 12 shows a view of an optional embodiment of the invention, in which the bucky support is not fitted with the possibility of being horizontally positioned.

Figure 13 shows, lastly, an optional simplified embodiment of the invention.

Figure 14 corresponds to a general perspective view of an optional embodiment of the invention.

Figure 15 shows also a perspective view of the inner part of the body of the column devoid of the protecting plates which can adopt any configuration as considered appropiate, this view showing also the conductive and protecting body configuration of the different cables located inside the piping, so-called articulated piping, which is capable of being moved in a vertical ascending and descending sense in accordance with the performing of the toothed belts on the supporting element.

Figure 16 shows a perspective view of the upper part of the column represented in figures 13 and 14, wherein the servomechanism fitted with the potenciometer can be seen.

Figure 17 shows, lastly, a view similar to that represented in figure 16, thru the opposite side, and - showing also the potentiometer in the strict sense, as well as the circuit.

### DESCRIPTION OF THE PREFERRED EMBODIMENT OF THE INVENTION

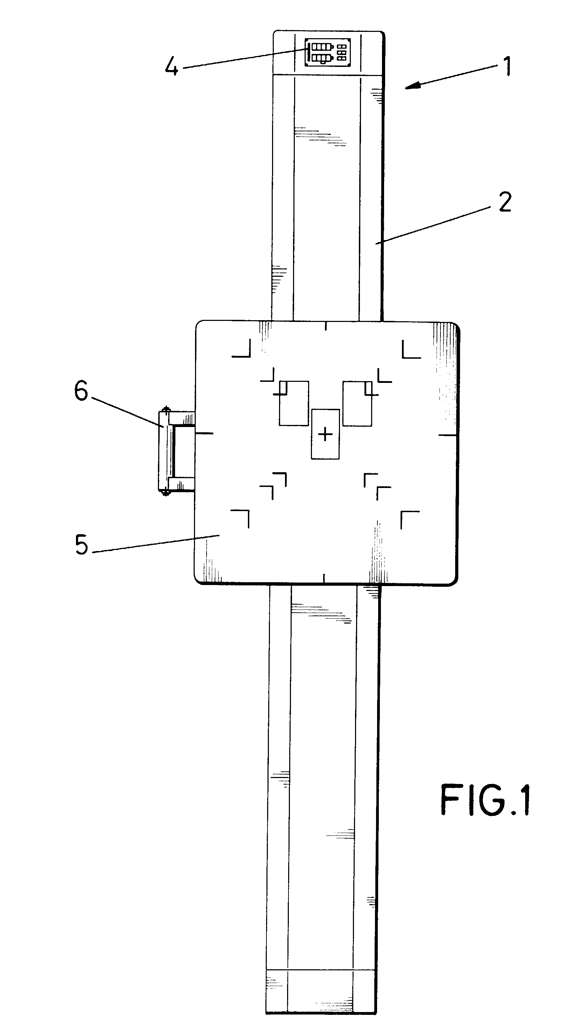

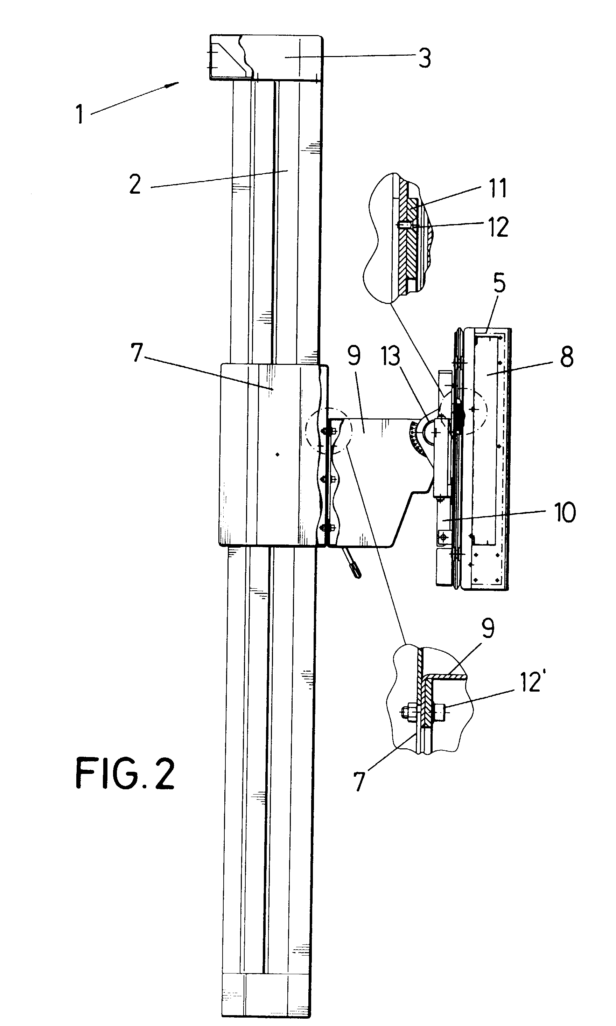

Following the figure 1, it can be seen, in a whole, the object of the invention related to an improved apparatus for radiological scannings (1), this being a graphic representation corresponding to a frontal view, implemented in figure 2, in which some parts thereof, partially sectioned, can be seen, this view showing also that the improved apparatus for radiological scanning (1) is formed starting from a column (2), covered by remplaceable plates which are fixed on the inner zone of the own column structure, where the elements aiding the raising and descent of the bucky (5), fitted with a handle (6), and capable of being mobilized in a circular sense until reaching 180º, and to this end the bucky (5) is fixed, thru its rear part, on an emerging support (9), constitutive of an intermediate carriage which is fixed, thru its rear part, on the rack-carriage (7), perimetrally fastened on the external surface of column (2), and fixed on the inner mechanisms thru elements which are inserted and fixed thru a longitudinal slot existing on a side of the column body (2), which is capable of allowing the covers to be remplaced, which are fixed on the inner zones of the column (2) by means of clips, so renewing the aesthetic appearance of the own column (2), if necessary.

At the upper part of the column (2), to be exact, at the upper projection (3), there is a digital display - (4), implemented with optic indicators, optionally capable of activating acoustic indicators, so, on the lines of this display (4), achieving in a visual way, the control required from the apparatus for radiological scannings (1).

The rack-carriage (7), such as it can be seen in the lower detail of figure 2, is fixed on the intermediate carriage (9) by means of screws (12'), while the intermediate carriage (9) is fixed on the rear part of the bucky (5) by means of screws (12), in collaboration with an intermediate plate (11), supporting legs (10) emerging from the rear part of the bucky (5), which can facilitate the performing of a radiologist when he must carry out scannings on laying down or semi laying down patients, relaying also the rear part (5), and located between two articulated legs (10), on two projections (13), joining at the sides of the intermediate carriage (9), which has represented a graduated scale serving as an optical information means about the angulation required from the bucky (5).

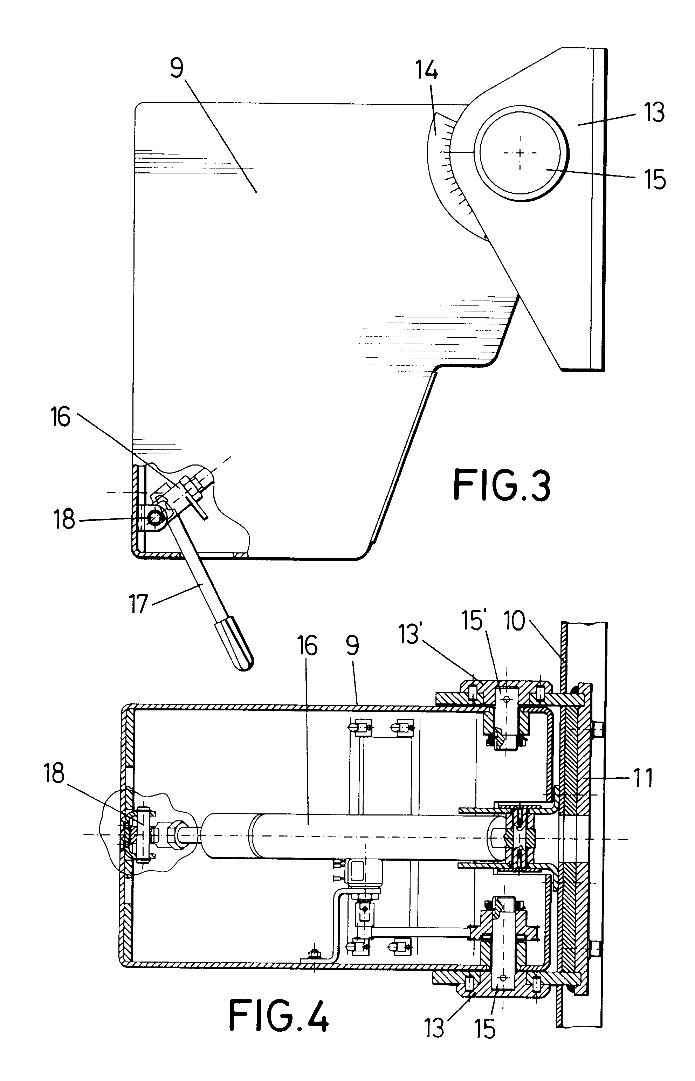

The graduated scale (14) is shown in figure 3, and the union of the emerging piece (13) and the intermediate carriage (9) is obtained by means of a cross element (15), inserted thru both sides of body (13), passing trough the intermediate carriage (9), at its emerging end, so obviously achieving the bucky (5) motion, on which the body (13) is fastened in a vertical ascending and descending sense, maintaining always a determinate angularity shown in the graduated scale (14), and, such as shown in figure 4, the motion is obtained starting from a lever (17), which, fastened on an articulation (18), acts by means of a gas spring, so obtaining the appropiate tilting of the bucky (5).

Figure 4 shows that the piece or part (13) is parallel to a similar part (13'), receiving, in both cases, a supporting body of the intermediate carriage formed by the fixing and receiving elements (15) and (15'), respectively.

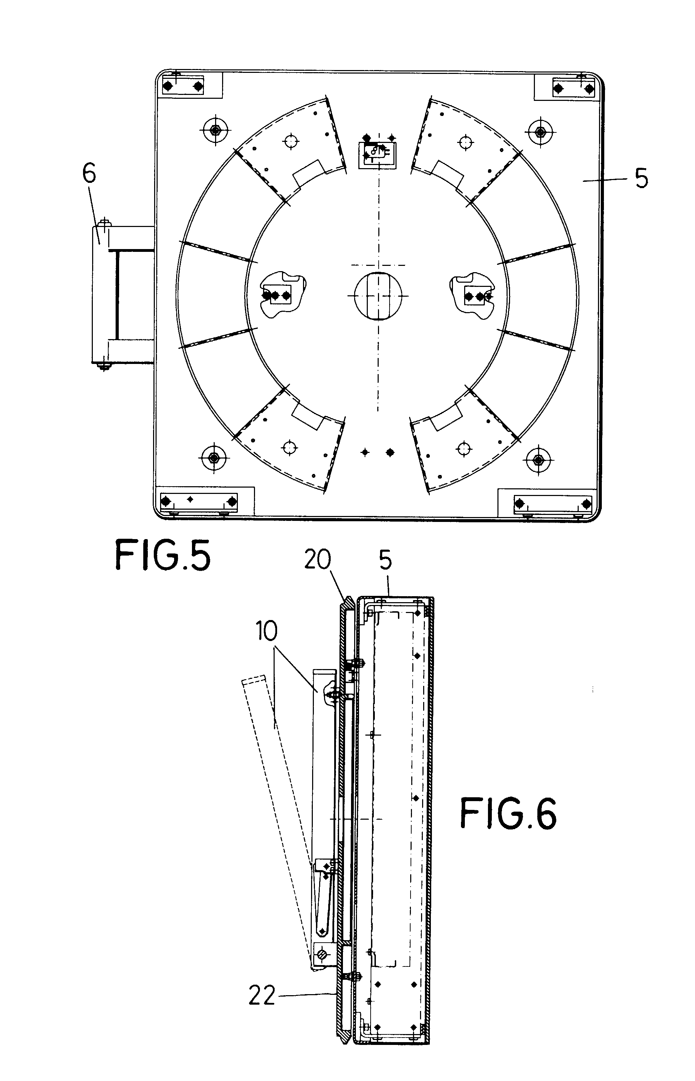

Figure 5 shows in detail the support of the bucky with its handle (6), the figure 6 visualizing that the extendable legs (10) allow them to be extended outward, so configuring themselves like a supporting point of bucky (5) in the strict sense.

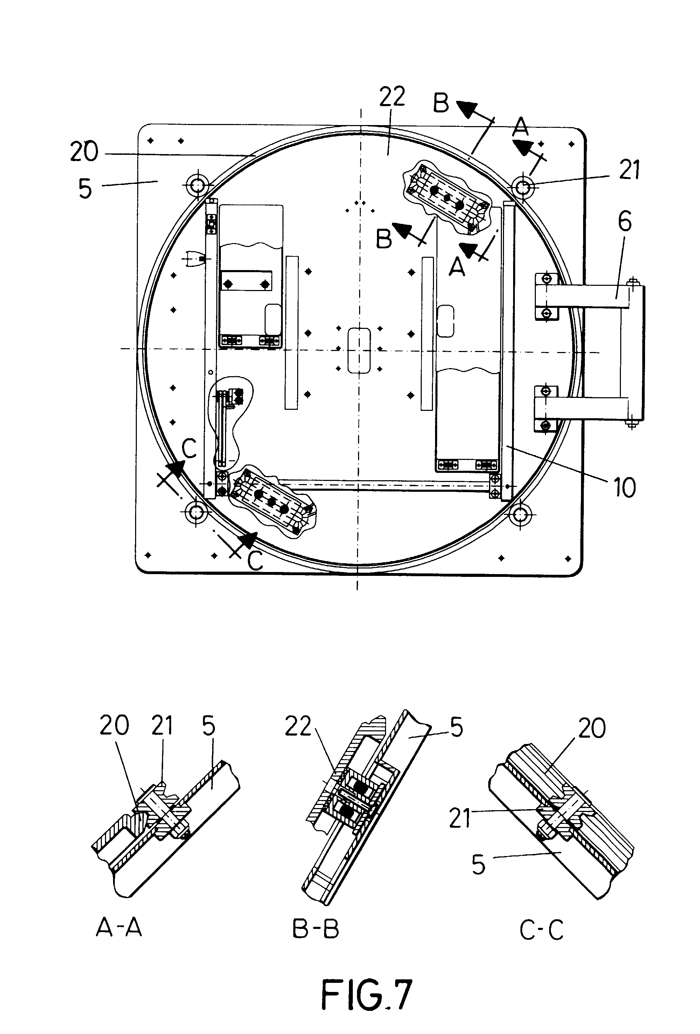

Figure 7 shows the fact that the bucky body can be mobilized in a circular turn in accordance with a plurality of pulleys (21), superimposed on the rear part of the bucky, and in collaboration with a circular body (20) presenting a perimetric projection to be inserted in the central slot of pulleys (21), so that, when these pulleys are positioned in four equidistant points on their perimeter and on the own body (20), the mobilization in accordance with the handle (6) is simplified, the detail A-A indicating that at the inner part, the body (22) carrying the perimetric projection (20) is joined to the rear part of the bucky (5) by means the pulleys (21).

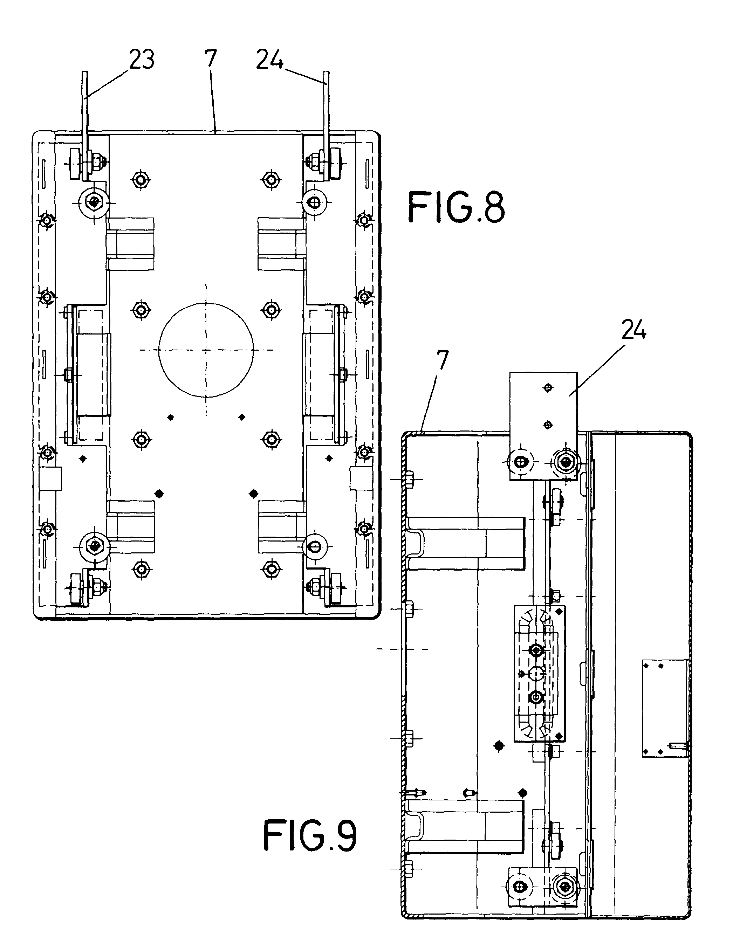

Figures 8 and 9 show that the rack-carriage (7) has two proyections or flanges (23) and (24), destined to facilitate their fixing.

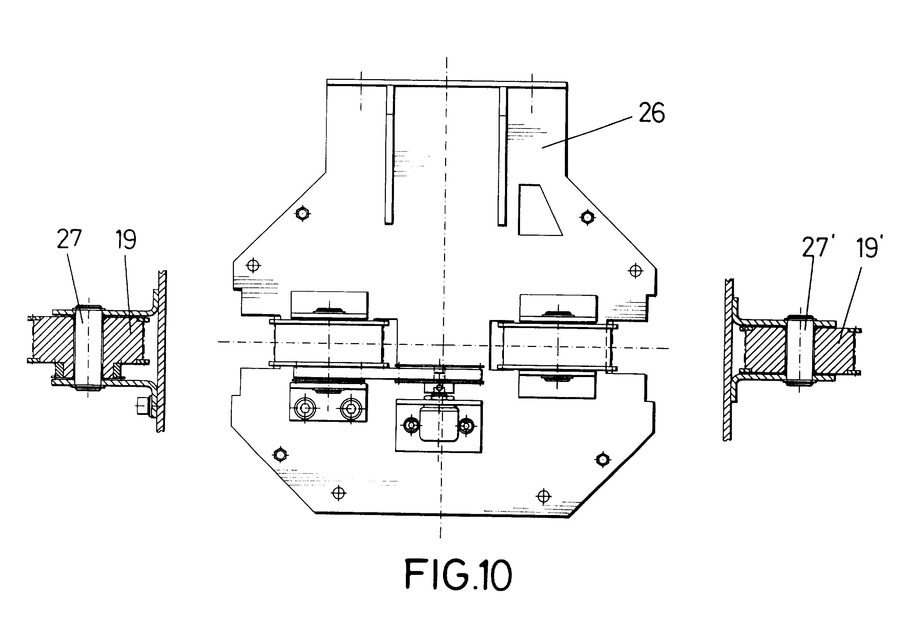

Figure 10 represents the support of the toothed wheels (26), fitted, at its central zone, with two circular pieces, fitted with a throat at its perimeter, each of the parts being referenced (27) and - (27'), while the throat is referenced in both cases (19).

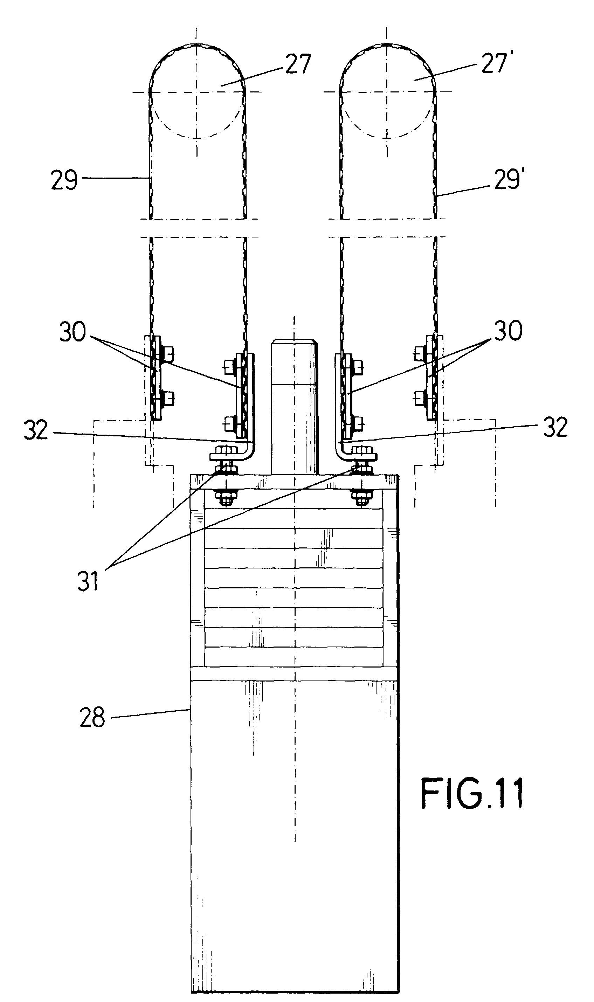

Figure 11 represents the couterweight assembly, which presents, at the upper part, two supporting pulleys (27) and (27'), on which the toothed belts (29) and (29') move, free of maintenance, the ends of which are fixed on flanges (30), and these, in turn, to be exact one of the flanges, are fixed, retaining the toothed belts (29) or (29'), to two angular pieces (32) and (32'), joined, in turn, by means of vertically located screws (31), to the - counterweight (28).

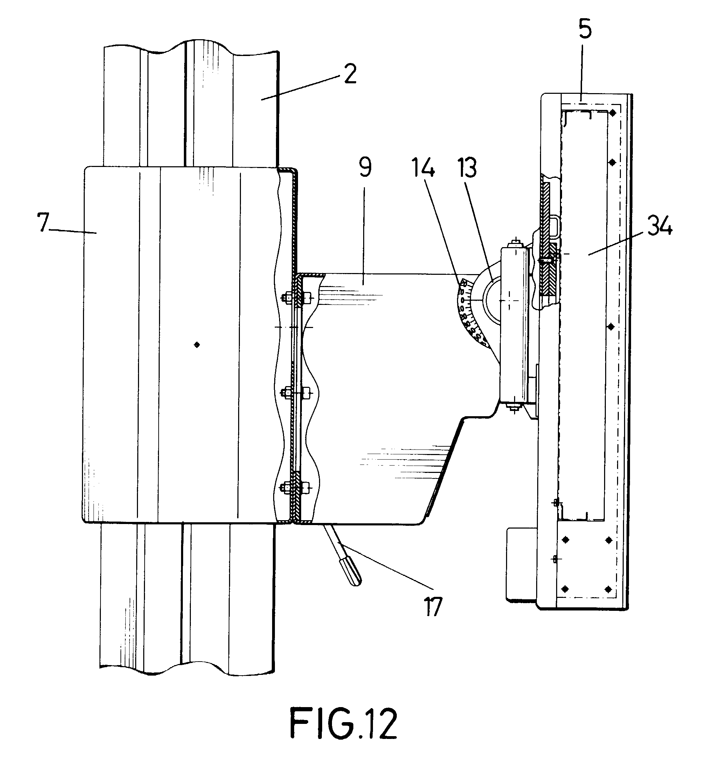

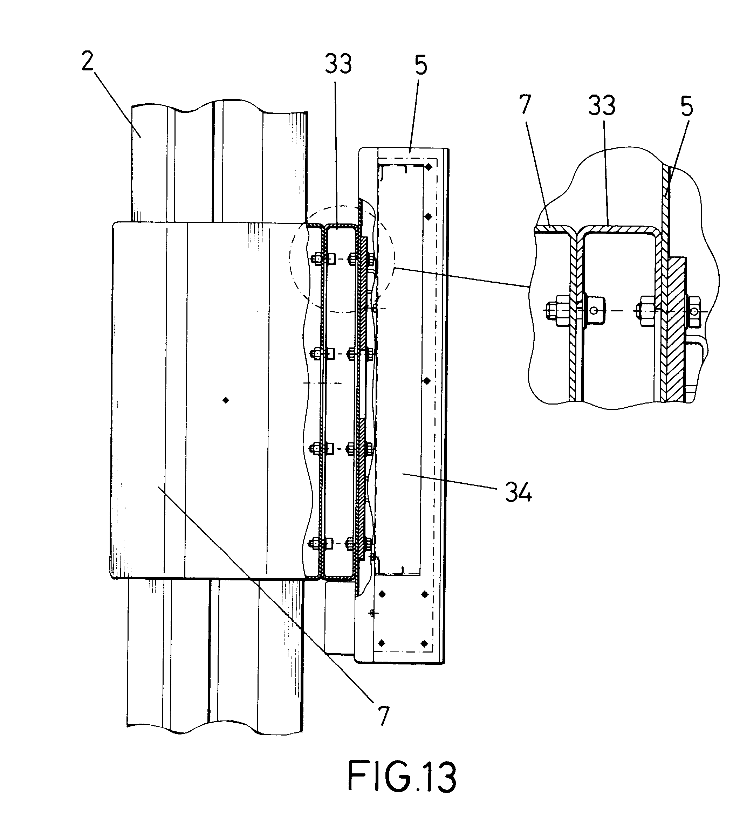

Figure 12 corresponds to a graphic representation of an optional embodiment of the invention, in which the apparatus for radiological scannings (1) is not implemented with extensible legs (10), while in figure 13, it can be seen that, at option, la invention can be devoid of the intermediate carriage (9), the bucky (5) being directly fixed on the rack-carriage (7), intermedianting a plate (33), which is internally hollow, thru which the union of elements (5) and (7) is performed, and receiving, inside, the screw heads and nuts utilized to this purpose.

Lastly, it must be pointed out that inside the bucky (5), there is an image supporting element (34), having an opening on a side, and that on the lines of the peculiarity as cited in the description, it allows it to be placed positioned with the opening towards the right hand or left hand, so facilitating both its arrangement on a point of a room or consultation room in which, owing to its dimensions, is considered more appropiate to accede to the interior of the bucky (5), thru the right zone or the left zone, requiring a simple change operation on the fixing of the own body (34), and in collaboration with the lateral opening of bucky, also fitted with a removable quality, to achieve the desired positioning.

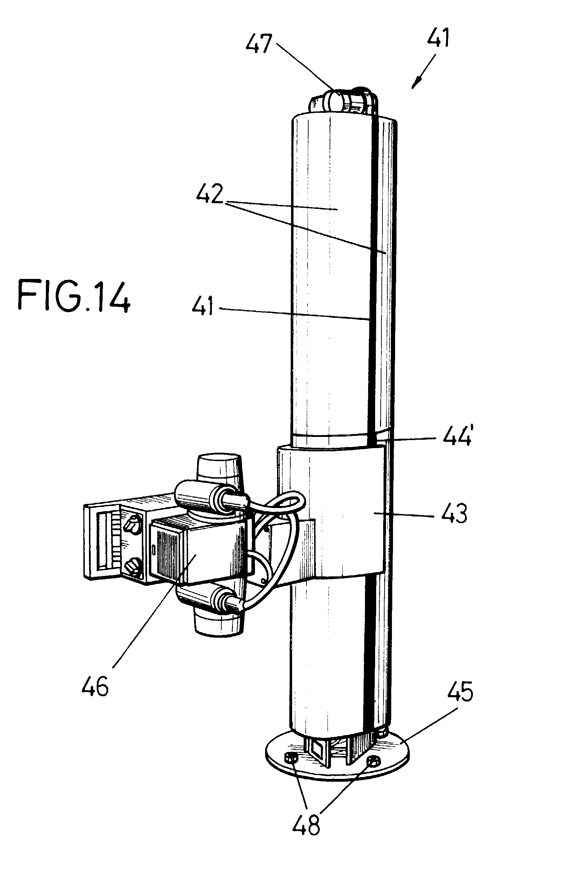

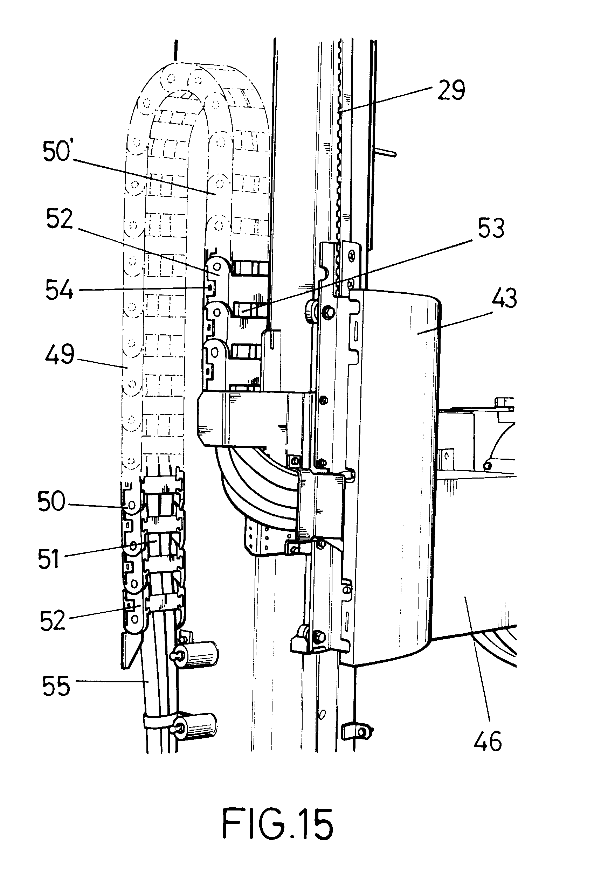

From the figures 14, 15, 16 and 17, it can be seen that, in a second optional embodiment, the improved apparatus for radiological scanning (41) is constituted starting from incorporating in the external part of the supporting column, protecting plates (42), - which can adopt any configuration considered as appropiate, these plates covering the external zone of a supporting column presenting as a lower supporting link, a platform (45) fitted with conventional screws (48), which is located in a vertical sense in order to arrange the appropiate supporting means for the inner column, on which the toothed belts (29) and - (29') are moved, mobilizing the tube body (46) in this optional embodiment, outwardly located, which has an external zone (43) which is added to the covering piece surface (42), and by means of the appropiate retaining means, located on the belts (29) and (29'), it is achieved that the body (43) moves in a vertical ascending and descending sense through slots (44), located on the upper part, which are extended et the lower part thru slots (44') located next, but having a lightly larger width than the upper slots.

Consequently, the tube (46) moves until obtaining an optimal working height, and having connection cables with the invention (55), incorporated inside a tubular body or articulated pipe or channelling (49), which, at its ends (50) and (50'), present lateral - links (52), which joined one other by means of conventional pins, facilitate the motion of the tubular body (49), maintaining, every moment, the cables (55) fully hiden inside.

The links (52) united by means of the pins located on sides, present, on the body of the tubular structure (49), at one of its sides, openings (51), and at the opposite end, openings (53), through - which the connections or cables (55) located inside, can be visualized, presenting recess (54), which positively collaborate to the displacement of the linked zones located at the ends of the articulated tubular piping (49).

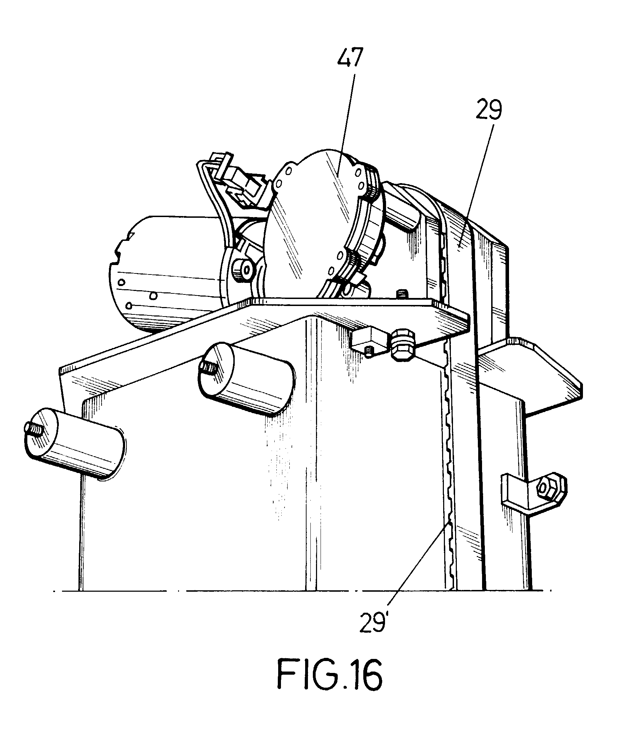

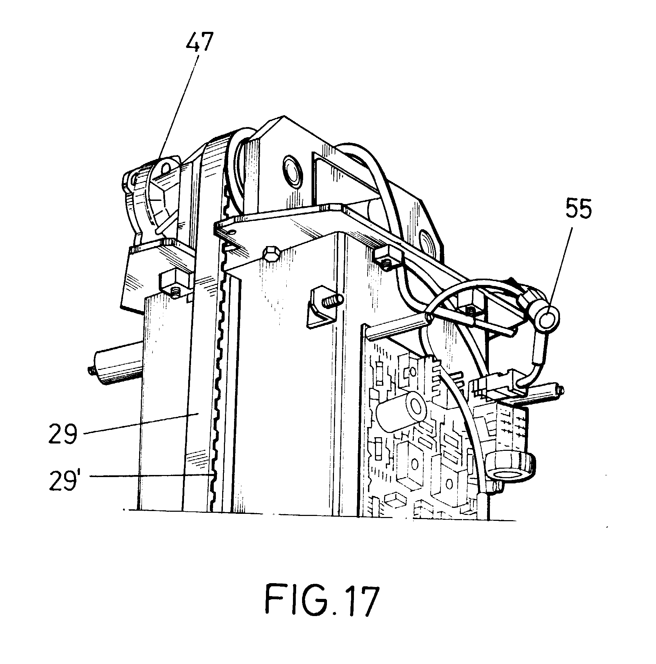

As can be seen in figure 16, at the upper part of the column there is a servomechanism (47), and in figure 17 it can be seen the existence of a potentiometer (55) connected with the circuit (56)

In synthesis, it is clearly confirmed that thanks to the chains (29) and (29'), used as elements which, in collaboration with a motor, attain the tube displacement (46), in a vertical ascending and descending sense until reaching an optimal working point, the cables (55), internally located, are channelled inside the articulated tubular piping (46), being hidden every moment, and having no problems as regards their mobilization owing to the existence, at the extremities of the articulated tubular piping (49) of links (52), which, fitted with the recesses (54) generate the possibility of holding different positions, in accordance with the performing of the toothed belts (29) and (29').

## Claims

1. An improved apparatus for radiological scanning, of those constituted starting from a vertical column, characterized in that the column (2) is externally covered with plates joined to the column body (2) by means of clips, optionally replaceable, presenting, at the upper part, a body (3), having, at its central part, a digital display (4), implemented with luminous indicators, the display being capable of being fitted, on the lines of the illumination requested from its optical indicators, with an optional implementation with acoustic indicators, the column (2) being fastened, directly at its lower part, on the floor or surface where it is situated, and, at the same time, it is reliably joined to a wall or ornamental cover, in order to obviate - tiltings during its use, the column having, at its sides, two longitudinal slots or splits, and the column (2) being perimetricaly surrounded by a rack-carriage (7), from which two emerging flanges (23) and (24) arise, the column being fitted, at its central and inner part, and positioned at the upper part, with a supporting piece (26) fitted with wheels (27) and (27'), having, at their central part, a perimetric sinking - (19), and the rack-carriage (7) being fixed, thru conventional screws, to an intermediate carriage (9), fitted, at its front part, with a projection emerging from it, housed in two projections (13) and (13') positioned at the rear part of the bucky (5), fitted with a lateral opening (8), and relying, as a supporting means for the intermediate carriage (9), on the emerging elements (13) and (13'), screws (15) and (15'), which act, at the same time, as shafts or turning - points, the mobilization being performed by means of a gas spring (16) anchored, at one of its ends, by means of a supporting element (18), and activated by a lever (17) which emerges from the lower part of the intermediate carriage (9), the bucky (5) being fixed to a plate (11) by means of screws (12), and two extractable and articulated legs (10) emerging from the rear part of the bucky.

2. An improved apparatus for radiological scanning, according to claim 1, characterized in that the bucky (5) presents a handle (6), by means of which it is possible to turn the bucky (5) up to reach 180º, through supporting and retaining elements, which, configured like a pulley and fitted with a perimetric split, allow an edge (20), emerging from a circular piece (22), to be engaged.

3. An improved apparatus for radiological scanning, according to claim 1, characterized in that toothed belts (29) and (29') are coupled on the toothed wheels, respectively, presenting retaining flanges (30), at their lower part, a complementary angular flange being incorporated in each of them (32) and (32'), which by means of conventional screws (31), vertically positioned, retain a counterweight (28).

4. An improved apparatus for radiological scanning, according to any of the preceding claims, characterized optionally in that the bucky (5) can be not fitted with the extractable legs (10).

5. An improved apparatus for radiological scanning, according to any of the preceding claims, characterized in that, optionally, the bucky can be fastened to the rack-carriage (7), by a hollow plate (33), without incorporating the intermediate carriage (9).

6. An improved apparatus for radiological scanning, according to the preceding claims,characterized in that the intermediate carriag (9) can be fitted with a graduated scale (14).

7. An improved apparatus for radiological scanning, according to the preceding claims, characterized in that the bucky tilting (5) is obtained by means of a gas - spring (16).

8. An improved apparatus for radiological scanning, according to the preceding claims, characterized in that the visualization of the coordinates required from the apparatus (1), and the status of the image incorporated in the inner support (34) located inside the bucky (5), are shown on the digital display or screen (4).

9. An improved apparatus for radiological scanning, according to the preceding claims, characterized in that it is fitted with sensors located at discreet positions obtained through photoelectric cells.

10. An improved apparatus for radiological scanning, according to the preceding claims, characterized in that it is fitted with an automatic collimation with horizontal and vertical bucky (5).

11. An improved apparatus for radiological scanning, according to the preceding claims, characterized in that it is capable of performing an exposition in any position of the rotation angle.

12. An improved apparatus for radiological scanning, according to the preceding claims, characterized in that it is fitted with negative electrical brakes, releasing and facilitating the mobilization of the rack-carriage and elements fastened thereto when they are fed by electrical energy.

13. An improved apparatus for radiological scanning, according to the preceding claims, characterized in that the bucky (5), fitted with a lateral opening (8), can be positioned in an indistinct way towards the right side or towards the left side, like the body (34) carring the image.

14. An improved apparatus for radiological scanning, according to the preceding claims, characterized in that in an optional embodiment, it presents, at the external part of the support or vertical column, parts (42) surrounding its external surface, separated one other by means of longitudinal slots (44), located at the upper part of the sides of parts (42), extended at their lower part and in an equal manner, in vertical sanse by slots (44') presenting a lightly greater width, having, at the upper part of the supporting column, a servomechanism (47) and a potetiometer (55), presenting, at a side of the column, a circuit (56), the circuit remaining covered by the external protection elements (42), which can adopt any configuration considered as convenient, having, on the surface of the elements (42), a supporting element (43) of a tube (46), which moves in a vertical upward and downward sense by means of toothed belts (29) and (29').

15. An improved apparatus for radiological scanning, according to claim 14, characterized in that inside the protection elements or casings (42), there is a cable bundle (55), located inside an articulated pipe (49), made of a flexible material, presenting at its ends (50) lateral parts (52) joined one other by means of pins (51), presenting windows (53) at the two faces of the zone laterally protected by links (52) fitted with a recess (54).

16. An improved apparatus for radiological scanning, according to claims 14 and 15, characterized in that the column supporting the servomechanism (47), potentiometer (55), circuit (56), toothed belts (29) and (29') and other mobilizing and acting elements is fastened, at its lower part, on a stand (45), retained in a vertical position by means of screws (48).
